(19) **Europäisches Patentamt / European Patent Office / Office européen des brevets**

(11) **EP 4 741 783 A1**

(12) **EUROPEAN PATENT APPLICATION**
published in accordance with Art. 153(4) EPC

(43) Date of publication:
**13.05.2026 Bulletin 2026/20**

(21) Application number: **24858499.7**

(22) Date of filing: **26.08.2024**

(51) International Patent Classification (IPC):
**G01J 3/28** (2006.01)    **G01J 3/42** (2006.01)
**G01J 3/44** (2006.01)    **G01J 3/02** (2006.01)
**G01N 21/55** (2014.01)    **G01N 21/59** (2006.01)
**G01N 21/25** (2006.01)    **G01N 21/31** (2006.01)
**G01N 21/01** (2006.01)

(52) Cooperative Patent Classification (CPC):
**G01J 3/02; G01J 3/28; G01J 3/42; G01J 3/44;
G01N 21/01; G01N 21/25; G01N 21/31;
G01N 21/47; G01N 21/55; G01N 21/59**

(86) International application number:
**PCT/CN2024/114425**

(87) International publication number:
**WO 2025/044963 (06.03.2025 Gazette 2025/10)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **30.08.2023 CN 202311127450**

(71) Applicant: **Huawei Technologies Co., Ltd.
Shenzhen, Guangdong 518129 (CN)**

(72) Inventors:
• **NIU, Xinxiang**
  **Shenzhen, Guangdong 518129 (CN)**
• **DONG, Xiaowen**
  **Shenzhen, Guangdong 518129 (CN)**
• **ZHANG, Xiang**
  **Shenzhen, Guangdong 518129 (CN)**
• **ZHOU, Min**
  **Shenzhen, Guangdong 518129 (CN)**

(74) Representative: **Huawei European IPR
Huawei Technologies Duesseldorf GmbH
Riesstraße 25
80992 München (DE)**

(54) **DETECTION DEVICE AND DETECTION METHOD**

(57)    This application provides a detection device, used in the detection field, for example, the spectrum detection field. The detection device includes an optical coupler, a scattering component, a detector, and a processor. The optical coupler is configured to: receive a to-be-detected light beam, and couple the to-be-detected light beam to the scattering component. The scattering component is configured to: scatter the to-be-detected light beam, and output a plurality of scattered to-be-detected light beams at different angles in time division mode to the detector. The plurality of scattered to-be-detected light beams are in one-to-one correspondence with the plurality of angles. The detector is configured to detect a plurality of different regions of the plurality of scattered to-be-detected light beams, to obtain a plurality of electrical signals. The detector is further configured to transmit the plurality of electrical signals to the processor. The processor is configured to compute the plurality of electrical signals to obtain related information of the to-be-detected light beams. In the technical solutions provided in this application, output directions of the to-be-detected light beams are adjusted, so that the related information of the to-be-detected light beams can be obtained by the detector in time division mode, to reduce costs of the detection device.

**(Cont. next page)**

FIG. 1

**Description**

This application claims priority to Chinese Patent Application No. 202311127450.2, filed with the China National Intellectual Property Administration on August 30, 2023 and entitled "DETECTION DEVICE AND DETECTION METHOD", which is incorporated herein by reference in its entirety.

**TECHNICAL FIELD**

This application relates to the detection field, and in particular, to a detection device and a detection method.

**BACKGROUND**

A spectrometer is configured to obtain spectrum information of a to-be-detected light beam. The spectrometer includes a scattering medium and a multi-channel detector. The scattering medium is configured to scatter the to-be-detected light beam to generate a characteristic scattering pattern. The scattering medium is formed by pressing particles with small average particle sizes, which requires low preparation costs. The small average particle size ensures that light with different wavelengths passes through different optical paths when penetrating the scattering medium, to generate speckle patterns with different distributions. The multi-channel detector is configured to obtain a plurality of electrical signals corresponding to a plurality of different regions in the speckle pattern. The spectrum information of the to-be-detected light beam can be obtained by computing the plurality of electrical signals. However, high costs of the detector lead to high costs of the spectrometer.

**SUMMARY**

This application provides a detection device and a detection method. Output directions of to-be-detected light beams are adjusted, so that related information of the to-be-detected light beams can be obtained by a detector in time division mode, to reduce costs of the detection device.

A first aspect of this application provides a detection device. The detection device includes an optical coupler, a scattering component, a detector, and a processor. The optical coupler is configured to: receive a to-be-detected light beam, and couple the to-be-detected light beam to the scattering component. The scattering component is configured to: scatter the to-be-detected light beam, and output a plurality of scattered to-be-detected light beams at different angles in time division mode to the detector. The plurality of scattered to-be-detected light beams are in one-to-one correspondence with the plurality of angles. For example, at a first moment, the scattering component is configured to output a $1^{st}$ scattered to-be-detected light beam to the detector at a first angle; and at a second moment, the scattering component is configured to output a $2^{nd}$ scattered to-be-detected light beam to the detector at a second angle. The detector is configured to detect a plurality of different regions of the plurality of scattered to-be-detected light beams, to obtain a plurality of electrical signals. The plurality of regions are in one-to-one correspondence with the plurality of electrical signals. The plurality of regions are in one-to-one correspondence with the plurality of scattered to-be-detected light beams. The detector is further configured to transmit the plurality of electrical signals to the processor. The processor is configured to compute the plurality of electrical signals to obtain related information of the to-be-detected light beams.

In an optional implementation of the first aspect, the scattering component includes a scattering medium and an optical modulator. The scattering medium is configured to: receive the to-be-detected light beam from the optical coupler, scatter the to-be-detected light beam, and cause the scattered to-be-detected light beams to be incident to the optical modulator. The optical modulator is configured to output the plurality of scattered to-be-detected light beams to the detector at the different angles. The plurality of scattered to-be-detected light beams are in one-to-one correspondence with the plurality of angles. In this application, a relative state between the to-be-detected light beam and the scattering medium remains unchanged, and system stability is higher.

In an optional implementation of the first aspect, the scattering component includes an optical modulator and a scattering medium. The optical modulator is configured to: receive the to-be-detected light beam from the optical coupler, and output a plurality of to-be-detected light beams at different angles to a scattering medium. A plurality of to-be-detected light beams are in one-to-one correspondence with the plurality of angles. The scattering medium is configured to: scatter the plurality of to-be-detected light beams to obtain a plurality of scattered to-be-detected light beams. The plurality of to-be-detected light beams are in one-to-one correspondence with the plurality of scattered to-be-detected light beams. The scattering medium is further configured to cause the plurality of scattered to-be-detected light beams to be incident to the detector. In this application, positions of the scattering medium and the detector are relatively fixed. Therefore, the plurality of regions correspond to a same scattering region of the scattering medium. Therefore, in this application, an area of the scattering medium can be reduced, to reduce hardware costs of the detection device. In an optional implementation of the first aspect, the detector is a linear array detector. The optical modulator is a one-dimensional optical modulator. A photosensitive surface of the detector is on a first plane. The optical modulator is configured to: change an output direction of the scattered to-be-detected light beam, to cause a light spot irradiated by the scattered to-be-detected light beams on the first plane to move along a first direction, where for example, at a first moment, a first light spot irradiated by a 1st scattered to-be-detected light beam on the first plane is located at a first position; and change an output direction of the scattered to-be-detected light beam, where at a second moment, a second light spot irradiated by a 2nd scattered to-be-detected light beams on the first plane is located at a second position. In this application, the one-dimensional optical modulator is used, so that the hardware costs of the detection device can be reduced.

In an optional implementation of the first aspect, a difference between a first width of a light spot irradiated by the scattered to-be-detected light beam on the first plane and a second width of the photosensitive surface of the detector is less than or equal to 50 percent of the first width. A direction of the first width and a direction of the second width are perpendicular to the first direction. When the difference between the first width and the second width is excessively large, a large amount of energy of the to-be-detected light beam is wasted, resulting in low light beam energy used to obtain the related information. Lower light beam energy used to obtain the related information indicates lower reliability of the related information. Therefore, the reliability of the obtained related information can be improved in this application.

In an optional implementation of the first aspect, the plurality of regions include a first region and a second region, and the first region and the second region include an overlapping region. When the optical modulator is in a first state, the detector is configured to detect the first region of the to-be-detected light beam; or when the optical modulator is in a second state, the detector is configured to detect the second region of the to-be-detected light beam. When there is no overlapping region between the first region and the second region, a change between the first state and the second state is large. When there is an overlapping region between the first region and the second region, a change between the first state and the second state is small. For example, the optical modulator is a reflector, the first state is a first angle of the reflector, and the second state is a second angle of the reflector. When there is an overlapping region between the first region and the second region, a change between the first angle and the second angle is small. A smaller state change indicates lower hardware costs of the optical modulator. Therefore, in this application, the hardware costs of the detection device can be reduced.

In an optional implementation of the first aspect, an area of the overlapping region is less than or equal to 90 percent of an area of the first region. When an area proportion of the overlapping region is excessively large, the reliability of the obtained related information is affected. Therefore, the reliability of the obtained related information can be improved in this application.

In an optional implementation of the first aspect, the detection device further includes a focus adjuster. The focus adjuster is located on an optical transmission path between the scattering component and the detector. The focus adjuster is configured to change a focal length of the scattered to-be-detected light beam. It is assumed that the plurality of electrical signals are equal to h electrical signals. In practice, a value of h may be changed based on a measurement precision requirement. The focal length is changed by using the value of h, so that utilization of the to-be-detected light beam can be improved, in other words, a light beam energy proportion used to obtain the related information can be improved. The utilization of the to-be-detected light beam affects the reliability of the related information. Therefore, the reliability of the obtained related information can be improved in this application.

In an optional implementation of the first aspect, a focus adjustment range of the focus adjuster is from 1 millimeter to 5 millimeters.

In an optional implementation of the first aspect, the detection device further includes a mask. The mask is located on the optical transmission path between the scattering component and the detector. The mask may be used to replace some computing functions implemented by using software. Therefore, efficiency of obtaining the related information can be improved by adding the mask.

In an optional implementation of the first aspect, the photosensitive surface of the detector is on the first plane. A ratio of a size of a light spot irradiated by the to-be-detected light beam on the first plane to a size of the photosensitive surface is from 1,000 to 1,000,000.

In an optional implementation of the first aspect, the detection device further includes a thermoelectric cooler controller. The thermoelectric cooler controller is configured to keep a temperature of the scattering medium within a target interval. The temperature of the scattering medium affects a weight matrix of the scattering medium. When a temperature change causes a weight matrix change, and the processor obtains the related information based on an original weight matrix, the reliability of the related information is affected. Therefore, the reliability of the obtained related information can be improved by adding the thermoelectric cooler controller.

In an optional implementation of the first aspect, the detection device further includes a first vibration isolator and a second vibration isolator. The first vibration isolator is configured to reduce vibration of the scattering medium. The second vibration isolator is configured to reduce vibration of the optical modulator. Both the vibration of the optical modulator and the vibration of the scattering medium affect the reliability of the related information. Therefore, the reliability of the obtained related information can be improved by adding the vibration isolators.

In an optional implementation of the first aspect, the processor includes a collector, a memory, and a controller. The collector is configured to: receive the plurality of electrical signals from the detector, and transmit the plurality of electrical signals to the memory. The memory is configured to store the plurality of electrical signals. The controller is configured to: obtain the plurality of electrical signals from the memory, and compute the plurality of electrical signals to obtain the related information of the to-be-detected light beams.

In an optional implementation of the first aspect, the processor is further configured to generate a control signal after obtaining each of the plurality of electrical signals. The optical modulator is configured to adjust an output angle of the scattered to-be-detected light beam based on the control signal.

In an optional implementation of the first aspect, the detection device further includes a light source. The light source is configured to irradiate a target light beam to a to-be-detected object. The to-be-detected light beam is reflected light or transparently transmitted light of the target light beam.

A second aspect of this application provides a detection method. The detection method is applied to a detection device. The detection method includes the following steps: The detection device scatters a to-be-detected light beam to obtain scattered to-be-detected light beams; the detection device detects a first region of the scattered to-be-detected light beam through a detector to obtain a first electrical signal; the detection device changes an output direction of the scattered to-be-detected light beam to cause a light spot of the scattered to-be-detected light beam to move relative to a photosensitive surface of the detector; the detection device detects a second region of the scattered to-be-detected light beam through the detector to obtain a second electrical signal; and the detection device obtains related information of the to-be-detected light beams based on the first electrical signal and the second electrical signal.

In an optional implementation of the second aspect, the first region and the second region include an overlapping region. The detection device obtains the related information of the to-be-detected light beams based on h electrical signals. The h electrical signals include the first electrical signal and the second electrical signal, and h is an integer greater than or equal to 2. The detection method further includes the following step: The detection device adjusts an area size of the overlapping region based on a value of h. In practice, the area size of the overlapping region affects accuracy of the related information. In this application, adjusting the area size of the overlapping region can improve accuracy of the obtained related information.

In an optional implementation of the second aspect, the detection device obtains the related information of the to-be-detected light beams based on h electrical signals. The h electrical signals include the first electrical signal and the second electrical signal, and h is an integer greater than or equal to 2. The detection method further includes the following step: The detection device adjusts a size of the light spot of the to-be-detected light beam based on a value of h. In practice, the size of the light spot affects utilization of the to-be-detected light beam. The utilization of the to-be-detected light beam affects accuracy of the related information. In this application, adjusting the size of the light spot based on the value of h can improve the accuracy of the obtained related information.

It should be understood that there is a similarity between the descriptions of the detection method and the check device in the first aspect or any optional implementation of the first aspect. Therefore, for the descriptions of the detection method, refer to the check device in the first aspect or any optional implementation of the first aspect. For example, a scattering component includes a scattering medium and an optical modulator. The detection device scatters a to-be-detected light beam through the scattering medium. The detection device changes output directions of scattered to-be-detected light beams through the optical modulator. For another example, the detection device includes a focus adjuster. The detection device adjusts the focus adjuster based on a value of h, to adjust a size of a light spot of the scattered to-be-detected light beam.

**BRIEF DESCRIPTION OF DRAWINGS**

FIG. 1 is a first structural diagram of a detection device according to an embodiment of this application;
FIG. 2a is a first structural diagram of a light spot and a photosensitive surface according to an embodiment of this application;
FIG. 2b is a second structural diagram of a light spot and a photosensitive surface according to an embodiment of this application;
FIG. 3 is a third structural diagram of a light spot and a photosensitive surface according to an embodiment of this application;
FIG. 4a is a second structural diagram of a detection device according to an embodiment of this application;
FIG. 4b is a third structural diagram of a detection device according to an embodiment of this application;
FIG. 5 is a fourth structural diagram of a light spot and a photosensitive surface according to an embodiment of this application;
FIG. 6 is a fifth structural diagram of a light spot and a photosensitive surface according to an embodiment of this application;
FIG. 7 is a fourth structural diagram of a detection device according to an embodiment of this application;

FIG. 8 is a structural diagram of a mask according to an embodiment of this application;
FIG. 9 is a diagram of an operating procedure of a detection device according to an embodiment of this application; and
FIG. 10 is a schematic flowchart of a detection method according to an embodiment of this application.

## DESCRIPTION OF EMBODIMENTS

This application provides a detection device and a detection method. Output directions of to-be-detected light beams are adjusted, so that related information of the to-be-detected light beams can be obtained by a detector in time division mode, to reduce costs of the detection device. It should be understood that "first", "second", and the like used in this application are merely used for distinguishing and description, but should not be understood as an indication or implication of relative importance or an indication or implication of a sequence. In addition, for brevity and clarity, reference numbers and/or letters are repeated in a plurality of accompanying drawings of this application. Repetition is not indicative of a strict limiting relationship between various embodiments and/or configurations.

The detection device provided in this application is used in the detection field, for example, the spectrum detection field. In the spectrum detection field, spectrum information of a to-be-detected light beam may be obtained by using a spectrometer. Specifically, the spectrometer includes a scattering medium and a multi-channel detector. A speckle pattern is formed by using the to-be-detected light beam passing through the scattering medium. Each-channel detector is configured to detect information of different regions in the speckle pattern, to obtain a plurality of electrical signals. Spectrum information of the to-be-detected light beam may be obtained by computing the plurality of electrical signals. However, high costs of the detector lead to high costs of the spectrometer.

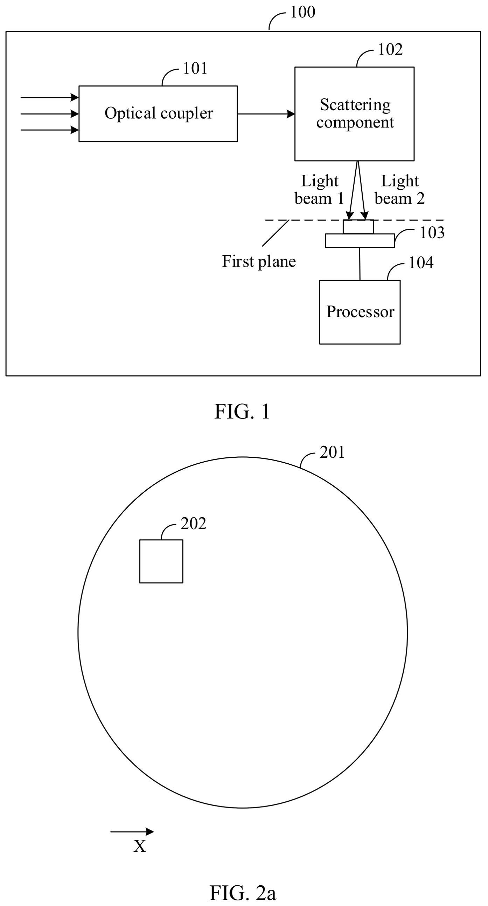

In view of this, this application provides a detection device. FIG. 1 is a first structural diagram of a detection device according to an embodiment of this application. As shown in FIG. 1, the detection device 100 includes an optical coupler 101, a scattering component 102, a detector 103, and a processor 104. The following describes each structure of the detection device 100.

The optical coupler 101 is also referred to as a coupler, a coupling module, or the like. The optical coupler 101 includes but is not limited to structures such as a lens group, an optical fiber and an array thereof, and a reflector group. The optical coupler 101 is configured to: collect a to-be-detected light beam, and guide the collected to-be-detected light beam to the scattering component 102. There is a stable space or an optical fiber optical path between the optical coupler 101 and the scattering component 102 for transmitting the to-be-detected light beam. The stable space refers to air, special gas, or vacuum.

The scattering component 102 is configured to: receive the to-be-detected light beam from the optical coupler 101, and scatter the to-be-detected light beam to obtain scattered to-be-detected light beams. The scattering component 102 is further configured to output the plurality of scattered to-be-detected light beams at different angles in time division mode to the detector 103. The plurality of scattered to-be-detected light beams are in one-to-one correspondence with the plurality of angles. For example, in the example in FIG. 1, at a first moment, the scattering component 102 is configured to output a 1st scattered to-be-detected light beam to the detector 103 at a first angle, where the 1st scattered to-be-detected light beam is also referred to as a light beam 1; and at a second moment, the scattering component 102 is configured to output a 2nd scattered to-be-detected light beam to the detector 103 at a second angle, where the 2nd scattered to-be-detected light beam is also referred to as a light beam 2. Solid lines with arrows in the figure represent the light beam 1 and the light beam 2. The light beam 1 and the light beam 2 are irradiated on a first plane, to form light spots. A position of the arrow of the solid line represents a central position of the light spot.

A photosensitive surface of the detector 103 is on the first plane. An area of a light spot of the scattered to-be-detected light beam is greater than an area of the photosensitive surface. Therefore, at different moments, the detector 103 can detect different regions of the scattered to-be-detected light beams. The detector 103 is also referred to as a photoelectric detector, and is configured to convert an optical signal into an electrical signal. In this embodiment of this application, the detector 103 is configured to detect a plurality of different regions of the plurality of scattered to-be-detected light beams in time division mode, to obtain a plurality of electrical signals. The plurality of regions are in one-to-one correspondence with the plurality of electrical signals. The plurality of regions are in one-to-one correspondence with the plurality of scattered to-be-detected light beams. For example, at a first moment, the detector 103 is configured to detect a first region of a light beam 1 to obtain a first electrical signal; and at a second moment, the detector 103 is configured to detect a second region of a light beam 2 to obtain a second electrical signal. In this embodiment of this application, the scattered to-be-detected light beams are measured in time division mode, so that the detector 103 can include fewer pixels. Therefore, costs of the detector 103 are reduced. For example, the detector 103 is a single-pixel detector or a linear array detector. A single-pixel detector is a detector including only one pixel. A linear array detector is a detector including only one column of pixels. The detector 103 is further configured to transmit the plurality of electrical signals to the processor 104.

The processor 104 may be a central processing unit (central processing unit, CPU), a network processor (network processor, NP), or a combination of a CPU and an NP. The processor 104 may further include a hardware chip or another general-purpose processor. The foregoing hardware chip may be an application-specific integrated circuit (application-specific integrated circuit, ASIC), a programmable logic device (programmable logic device, PLD), or a combination thereof. The processor 104 is configured to compute the plurality of electrical signals to obtain related information of the to-be-detected light beams. The processor 104 is further configured to output a clock signal. The scattering component 102 is configured to adjust an output angle of the scattered to-be-detected light beam based on the clock signal.

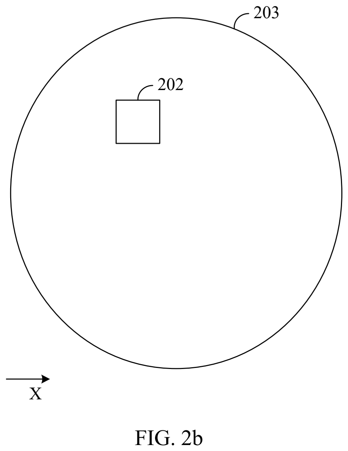

It can be learned from the descriptions of FIG. 1 that the scattered to-be-detected light beams form light spots on the first plane. FIG. 2a is a first structural diagram of a light spot and a photosensitive surface according to an embodiment of this application. As shown in FIG. 2a, at a first moment, a light beam 1 is irradiated on the first plane, to form a light spot 201. An area of a photosensitive surface 202 of the detector 103 is less than an area of the light spot 201. In practice, to ensure measurement precision and provide a specific adjustment margin, a ratio of a size of the light spot 201 to a size of the photosensitive surface 202 may be from 1,000 to 1,000,000. The photosensitive surface 202 is within a range of the light spot 201. FIG. 2b is a second structural diagram of a light spot and a photosensitive surface according to an embodiment of this application. As shown in FIG. 2b, at a second moment, a light beam 2 is irradiated on the first plane, to form a light spot 203. Because a central position of a light spot of a light beam 1 is different from a central position of the light spot of the light beam 2, a position of the photosensitive surface 202 moves relative to a position of the light spot. In the examples in FIG. 2a and FIG. 2b, the light spot 203 may be understood as being obtained by moving the light spot 201 toward a negative direction of an X-axis. A change in shapes and areas of the light spots caused by an angle change of the scattered to-be-detected light beams is ignored, in other words, it is assumed that the light spot 203 and the light spot 201 have a same area and a same shape. In the examples in FIG. 2b and FIG. 2a, the photosensitive surface 202 in FIG. 2b may be understood as being obtained by moving the photosensitive surface 202 in FIG. 2a in a positive direction of the X-axis relative to the light spot 201.

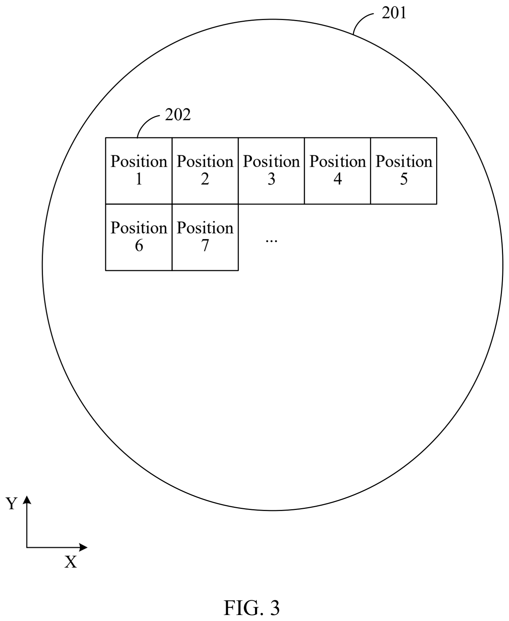

FIG. 3 is a third structural diagram of a light spot and a photosensitive surface according to an embodiment of this application. As shown in FIG. 3, due to movement of a light spot 201, a relative position of a photosensitive surface 202 changes. For example, in FIG. 3, at a first moment, the photosensitive surface 202 is located at a position 1. Driven by a clock signal, the scattering component 102 changes an output angle of the light beam, so that the light spot 201 moves in a negative direction of an X-axis. At a second moment, the photosensitive surface 202 is located at a position 2. The foregoing procedure is repeated until the photosensitive surface 202 is located at a position 5 at a fifth moment. The scattering component 102 changes a position of the light spot 201 again, so that the light spot 201 moves toward a positive direction of the X-axis and a positive direction of a Y-axis. At a sixth moment, the photosensitive surface 202 is located at a position 6. The foregoing procedure is repeated, so that the photosensitive surface 202 is located in a plurality of different regions of the light spot 201. In each region, the detector 103 obtains one electrical signal through the photosensitive surface 202, so that a plurality of electrical signals are obtained.

It can be learned from the descriptions of FIG. 1 that the scattering component 102 is configured to implement functions of scattering and changing an output direction of a light beam. The scattering component 102 can include a scattering medium and an optical modulator. The scattering medium is configured to implement the scattering function. The scattering medium is also referred to as a scattering module. The scattering medium may be a nano-particle pressing sheet, a multi-mode optical fiber, a diffraction optical array structure, or the like. The optical modulator is configured to implement the function of changing an output direction of a light beam. The optical modulator is also referred to as a scattering optical modulation module. The optical modulator may be a transmissive liquid crystal spatial optical modulator, a reflective liquid crystal spatial optical modulator, a digital micromirror and an array thereof based on a micro-electro-mechanical system (micro-electro-mechanical system, MEMS) technology, a magneto-optical spatial optical modulator, a rotating mirror system, an electro-optical microcavity array, or the like. In practice, the scattering medium and the optical modulator may be located at different positions in the detection device 100. This is described below.

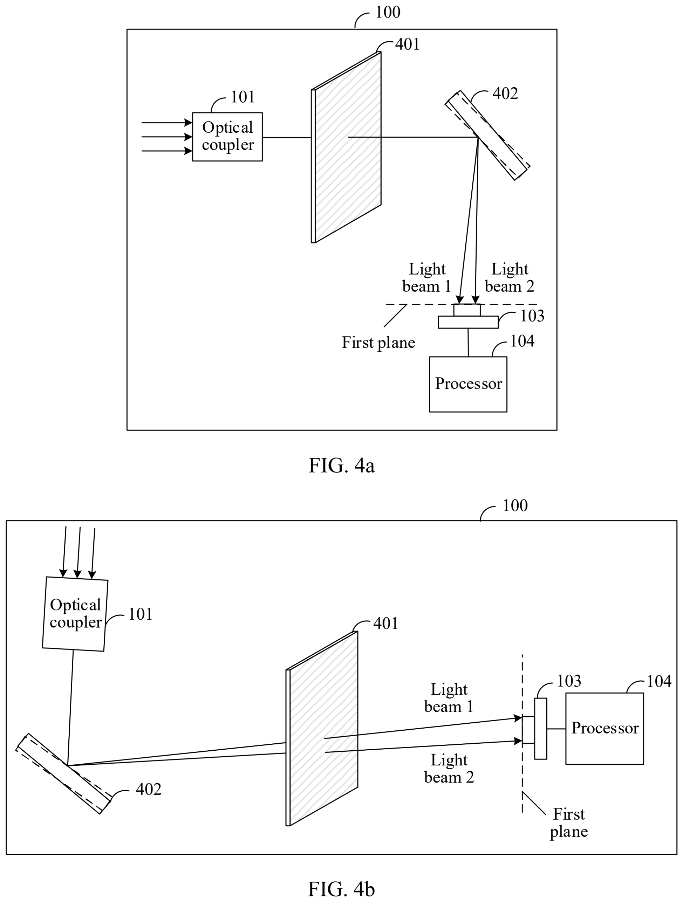

FIG. 4a is a second structural diagram of a detection device according to an embodiment of this application. As shown in FIG. 4a, based on FIG. 1, the scattering component 102 includes a scattering medium 401 and an optical modulator 402. The scattering medium 401 is configured to: receive a to-be-detected light beam from the optical coupler 101, and scatter the to-be-detected light beam to obtain scattered to-be-detected light beams. The scattering medium 401 is further configured to irradiate the scattered to-be-detected light beams to the optical modulator 402. The optical modulator 402 is configured to output the plurality of scattered to-be-detected light beams at different angles in time division mode to the detector 103. In the example in FIG. 4a, an output angle of the light beam may be changed by changing an angle of the optical modulator 402.

FIG. 4b is a third structural diagram of a detection device according to an embodiment of this application. As shown in FIG. 4b, based on FIG. 1, the scattering component 102 includes a scattering medium 401 and an optical modulator 402. The optical modulator 402 is configured to receive a to-be-detected light beam from the optical coupler 101. The optical modulator 402 is further configured to output a plurality of to-be-detected light beams at different angles in time division mode to the scattering medium 401. For example, at a first moment, the optical modulator 402 is configured to transmit a first to-be-detected light beam to the scattering medium 401 at a first angle; and at a second moment, the optical modulator 402 is configured to transmit a second to-be-detected light beam to the scattering medium 401 at a second angle. In the example in FIG. 4b, an output angle of the light beam may be changed by changing an angle of the optical modulator 402. The scattering medium 401 is configured to: receive the plurality of to-be-detected light beams in time division mode, and scatter the plurality of to-be-detected light beams to obtain a plurality of scattered to-be-detected light beams. The plurality of scattered to-be-detected light beams are in one-to-one correspondence with the plurality of to-be-detected light beams. The scattering medium 401 is further configured to output the plurality of scattered to-be-detected light beams at different angles in time division mode to the detector 103.

It can be learned from the foregoing descriptions of FIG. 1 that the processor 104 is configured to obtain the related information of the to-be-detected light beams based on the plurality of electrical signals. In practice, the processor 104 is configured to obtain the related information of the to-be-detected light beams based on a weight matrix of the scattering medium 401 and the plurality of electrical signals.

$$\begin{pmatrix} M11 & M12 & ... & M1n \\ M21 & M22 & ... & M2n \\ ... & ... & ... & ... \\ Mm1 & Mm1 & ... & Mmn \end{pmatrix} \text{Weight matrix 1}$$

The weight matrix 1 of the scattering medium 401 includes m rows and n columns. Therefore, the weight matrix 1 includes m×n values. m and n are integers greater than 0. The scattering medium 401 includes m scattering regions. Each of the m scattering regions corresponds to one row of values in the weight matrix 1. A value corresponding to each scattering region depends on a physical characteristic of the scattering medium in the scattering region. The weight matrix may be obtained through measurement. How the processor 104 obtains the weight matrix 1 is not limited in embodiments of this application. In the detection devices in FIG. 4a and FIG. 4b, the processor 104 can obtain the related information of to-be-detected light beams in a similar manner. This is described below.

In the detection device in FIG. 4a, regions detected by the detector 103 at different moments correspond to different scattering regions in the scattering medium 401. For example, the position 1 in FIG. 3 is a first region of the light spot 201 detected by the detector 103 at the first moment. The first region of the light spot 201 is obtained by passing through a first scattering region of the scattering medium 401. The position 2 in FIG. 3 is a second region of the light spot 201 detected by the detector 103 at the second moment. The second region of the light spot 201 is obtained by passing through a second scattering region of the scattering medium 401. Therefore, the plurality of regions detected by the detector 103 are in one-to-one correspondence with the plurality of different scattering regions in the scattering medium 401. The processor 104 can obtain the related information of the to-be-detected light beams according to the following formulas:

$$\begin{pmatrix} M11\lambda1 + M12\lambda2 + \cdots + M1n\lambda n = K1 \\ M21\lambda1 + M22\lambda2 + \cdots + M2n\lambda n = K2 \\ ... + \cdots + \cdots + \cdots = \cdots \\ Mh1\lambda1 + Mh2\lambda2 + \cdots + Mhn\lambda n = Kh \end{pmatrix} \text{Formula set 1}$$

The processor 104 obtains h electrical signals from the detector 103. The h electrical signals are respectively K1, K2, ..., Kh. The formula set 1 includes h formulas. The h formulas are in one-to-one correspondence with the h electrical signals. h is an integer less than or equal to m. A value of h is greater than or equal to that of n. The processor 104 can obtain n values of $\lambda$ according to the h formulas. The n values of $\lambda$ are respectively $\lambda1$, $\lambda2$, ..., $\lambda n$. A value of $\lambda1$ can represent an energy intensity of the to-be-detected light beam at a wavelength $\lambda1$. The processor 104 is further configured to establish a correspondence between the n values of $\lambda$ and n wavelengths. The correspondence is spectrum information of the to-be-detected light beam. In this embodiment of this application, the related information of the to-be-detected light beams may be the n values of $\lambda$ or the correspondence.

In the detection device in FIG. 4b, regions detected by the detector 103 at different moments correspond to a same scattering region in the scattering medium 401. However, because angles at which to-be-detected light beams at different moments are incident to the same scattering region are different, the to-be-detected light beams at the different incident angles also generate different weight values. Therefore, in the detection device in FIG. 4b, the processor 104 can obtain a weight matrix 2 similar to the weight matrix 1. The weight matrix 2 may be obtained through measurement. How the processor 104 obtains the weight matrix 2 is not limited in embodiments of this application. The processor 104 can obtain the related information of the to-be-detected light beams based on a formula set similar to the foregoing formula set 1.

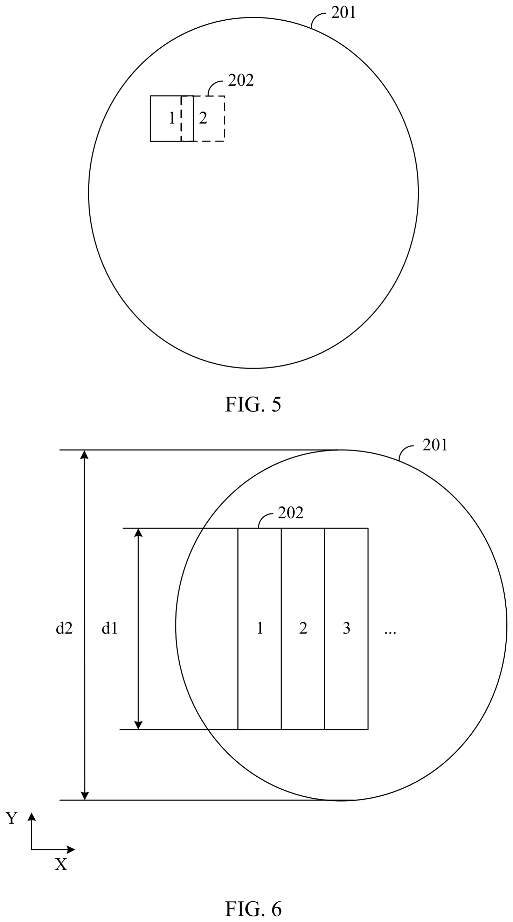

It can be learned from the descriptions of FIG. 4a and FIG. 4b that the detection device 100 can change the output angle of the scattered to-be-detected light beam through the optical modulator 402. In the example in FIG. 4a, the optical modulator 402 is configured to directly change the output angle of the scattered to-be-detected light beam. In the example in FIG. 4b, the optical modulator 402 is configured to change the output angle of the scattered to-be-detected light beam by changing the output angle of the to-be-detected light beam. Usually, a larger change of the output angle of the scattered to-be-detected light beams indicates longer adjustment duration required by the optical modulator 402, or higher hardware costs of the optical modulator 402. To reduce the adjustment duration or reduce the hardware costs, the plurality of regions detected by the detector 103 can include an overlapping region. FIG. 5 is a fourth structural diagram of a light spot and a photosensitive surface according to an embodiment of this application. As shown in FIG. 5, at a first moment, a light beam 1 is irradiated on the first plane, to form a light spot 201. A position of the photosensitive surface 202 of the detector 103 relative to the light spot 201 is a position 1. At a second moment, a position of the photosensitive surface 202 relative to the light spot 201 is a position 2. The position 1 may also be referred to as a first region of the light spot 201 or a first region of the light beam 1. The position 2 can also be referred to as a second region of the light spot 201 or a first region of the light beam 2. As shown in FIG. 5, a solid-line box represents the first region, and a dashed-line box represents the second region. There is an overlapping part between the first region and the second region. In practice, when an area proportion of the overlapping region is excessively large, reliability of the obtained related information of the to-be-detected light beams is affected. Therefore, an area of the overlapping region can be less than or equal to 90 percent of an area of the first region.

It can be learned from the foregoing descriptions that the processor 104 is configured to obtain the related information of the to-be-detected light beams based on the h electrical signals. In practice, the value of h may be changed based on a measurement precision requirement. When there is an overlapping region between the first region and the second region, the processor 104 is further configured to adjust an area size of the overlapping region based on the value of h. For example, when the value of h decreases, the processor 104 is configured to reduce the area of the overlapping region; or when the value of h increases, the processor 104 is configured to increase the area of the overlapping region.

It can be learned from the descriptions of FIG. 1 that the detector 103 may be a single-pixel detector or a linear array detector. When the detector 103 is a single-pixel detector, to measure a main region of the light spot 201 as much as possible, the optical modulator 402 needs to be a two-dimensional optical modulator. The two-dimensional optical modulator can drive the light spot 201 to move along two dimensions. For example, in the example in FIG. 3, the optical modulator 402 can drive the light spot 201 to move along the X-axis and the Y-axis. In embodiments of this application, when the detector 103 is a linear array detector, the optical modulator 402 may be a one-dimensional optical modulator. The one-dimensional optical modulator can drive the light spot 201 to move along only one dimension. FIG. 6 is a fifth structural diagram of a light spot and a photosensitive surface according to an embodiment of this application. As shown in FIG. 6, a photosensitive surface 202 of the detector 103 is a rectangle. The detector 103 is distributed with a plurality of pixels along a Y-axis. The optical modulator 402 is adjusted to cause a light spot 201 to move along a negative direction of an X-axis. The negative direction of the X-axis is also referred to as a first direction. For example, in the example in FIG. 6, at a first moment, the photosensitive surface 202 is located at a position 1. The optical modulator 402 is adjusted to cause the light spot 201 to move along the negative direction of the X-axis. At a second moment, the photosensitive surface 202 is located at a position 2. The foregoing procedure is repeated, so that the photosensitive surface 202 is located in a plurality of different regions of the light spot 201. In practice, hardware costs of a two-dimensional optical modulator are usually higher than hardware costs of a one-dimensional optical modulator. Therefore, in embodiments of this application, hardware costs of the detection device 100 can be reduced. In addition, detection efficiency can be improved by using the linear array detector.

In practice, light beam energy used to obtain the related information is related to reliability of the obtained related information. Lower light beam energy used to obtain the related information indicates lower reliability of the related information. Therefore, in embodiments of this application, the reliability of the related information can be improved by improving the light beam energy used to obtain the related information. For example, as shown in FIG. 6, a first width of the light spot 201 irradiated by a scattered to-be-detected light beam on the first plane is d2. A second width of the photosensitive surface 202 of the detector 103 is d1. A direction of the second width and a direction of the first width are perpendicular to the first direction. A difference between d2 and d1 is less than or equal to 50 percent of d2.

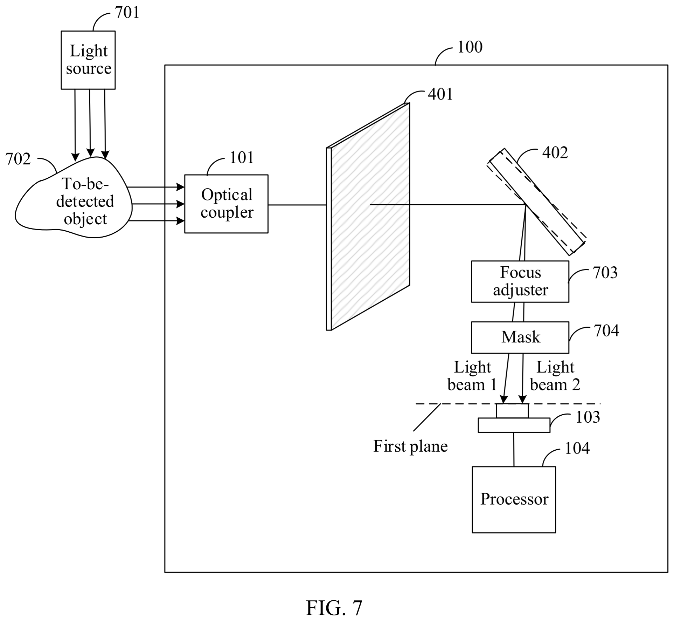

It can be learned from the foregoing descriptions that, the value of h may be changed based on the measurement precision requirement. When the value of h decreases, the light beam energy used to obtain the related information decreases, affecting the reliability of the related information. Therefore, the detection device 100 can further include a focus adjuster. The focus adjuster is configured to change a size of a light spot irradiated by the scattered to-be-detected light beam on the first plane. FIG. 7 is a fourth structural diagram of a detection device according to an embodiment of this application. As shown in FIG. 7, based on FIG. 4a, the detection device 100 further includes a focus adjuster 703. The focus adjuster 703 is located on an optical transmission path between the scattering component 102 and the detector 103. A focus adjustment range of the focus adjuster 703 may be from 1 millimeter to 5 millimeters. When the detection device 100 further includes the focus adjuster 703, the processor 104 is further configured to adjust the focus adjuster 703 based on the value of h to change a size of the light spot 201. For example, when the value of h decreases, the processor 104 is configured to adjust the focus adjuster 703 to reduce an area of the light spot 201; or when the value of h increases, the processor 104 is configured to adjust the focus adjuster 703 to increase an area of the light spot 201.

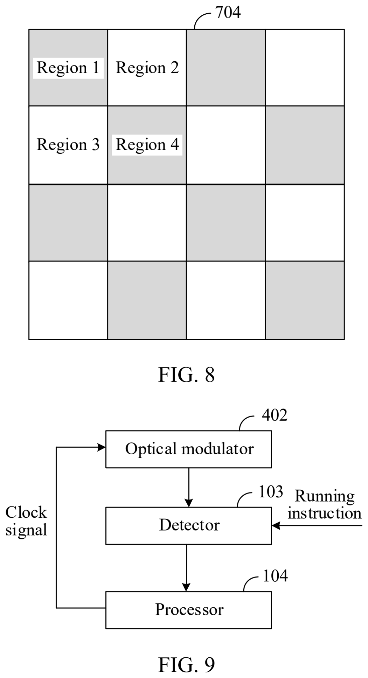

As shown in FIG. 7, the detection device 100 further includes a mask 704. The mask 704 is located on the optical transmission path between the scattering component 102 and the detector 103. The mask 704 may be used to replace some computing functions implemented by using software. FIG. 8 is a structural diagram of a mask according to an embodiment of this application. As shown in FIG. 8, the mask 704 includes different regions that are alternately distributed in black and white. For example, a region 1 and a region 4 of the mask 704 are black regions. The black region blocks a scattered to-be-detected light beam. The region 2 and the region 3 of the mask 704 are white regions. The white region allows a scattered to-be-detected light beam to pass through. When the four regions (the region 1, the region 2, the region 3, and the region 4) correspond to the first region of the light spot 201, the mask 704 is equivalent to performing frequency domain filtering on the first electrical signal. Therefore, in this embodiment of this application, efficiency of obtaining the related information can be improved by adding the mask.

In practice, the detection device 100 may further include a light source. For example, when the detection device 100 is an absorption coefficient measurement device, the detection device 100 is configured to detect a light absorption proportion of a to-be-detected object. As shown in FIG. 7, the light source 701 is configured to output a target light beam. The target light beam is irradiated to a to-be-detected object 702. The to-be-detected object 702 is configured to reflect or transparently transmit the target light beam. A to-be-detected light beam obtained by the optical coupler 101 is reflected light or transparently transmitted light of the target light beam.

In practice, a temperature of the scattering medium 401 affects a weight matrix of the scattering medium 401. When a temperature change causes a weight matrix change, and the processor obtains related information based on an original weight matrix, reliability of the related information is affected. Therefore, the detection device 100 can further include a thermoelectric cooler controller. The thermoelectric cooler controller is configured to keep the temperature of the scattering medium 401 within a target interval. Similarly, vibration of the optical modulator 402 and vibration of the scattering medium 401 also cause a weight matrix change. When the processor 104 is configured to obtain related information based on an original weight matrix, reliability of the obtained related information is affected. Therefore, the detection device 100 can further include a first vibration isolator and a second vibration isolator. The vibration isolator may be a spring, a washer, or the like. The first vibration isolator is configured to reduce vibration of the scattering medium 401. The second vibration isolator is configured to reduce vibration of the optical modulator 402.

FIG. 9 is a diagram of an operating procedure of a detection device according to an embodiment of this application. As shown in FIG. 9, a detector 103 is configured to: receive a running instruction, and detect a first region of a scattered to-be-detected light beam according to the running instruction to obtain a first electrical signal. The detector 103 is further configured to output the first electrical signal to a processor 104. After obtaining the first electrical signal, the processor 104 is configured to output a clock signal. The clock signal can also be referred to as a control signal. An optical modulator 402 is configured to adjust an output angle of the scattered to-be-detected light beam based on the clock signal. After the output angle is adjusted, the detector 103 is configured to detect a second region of a scattered to-be-detected light beam to obtain a second electrical signal. The detector 103 is further configured to output the second electrical signal to the processor 104. After obtaining the second electrical signal, the processor 104 is configured to output the clock signal again. The foregoing procedure is cyclically performed until the processor 104 obtains h electrical signals. The processor 104 is configured to obtain related information of to-be-detected light beams based on the h electrical signals.

In practice, the processor 104 can include a collector, a memory, and a controller. The collector is configured to: receive a plurality of electrical signals from the detector 103, and transmit the plurality of electrical signals to the memory. The memory may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), a flash memory, or the like. The volatile memory may be a random access memory (random access memory, RAM). The memory is configured to store the plurality of electrical signals. The controller is configured to: obtain the plurality of electrical signals from the memory, and compute the plurality of electrical signals to obtain the related information of the to-be-detected light beams.

It should be understood that FIG. 1 to FIG. 8 are merely several examples of the detection device provided in embodiments of this application. In practice, a person skilled in the art can adaptively modify the detection device as required. For example, in FIG. 1, between the detector 103 and the scattering component 102, the detection device 100 further includes a light filter, an attenuator, or the like. The light filter is used to isolate stray light. The attenuator is configured to control an amount of entering light, to prevent the detector 103 from being saturated. For another example, in FIG. 3, when the photosensitive surface 202 is located at the position 5, the scattering component 102 moves the light spot 201 toward the positive direction of the Y-axis, so that the position 6 of the photosensitive surface 202 is located right below the position 5. In this case, duration for adjusting the position of the light spot by the scattering component 102 can be reduced.

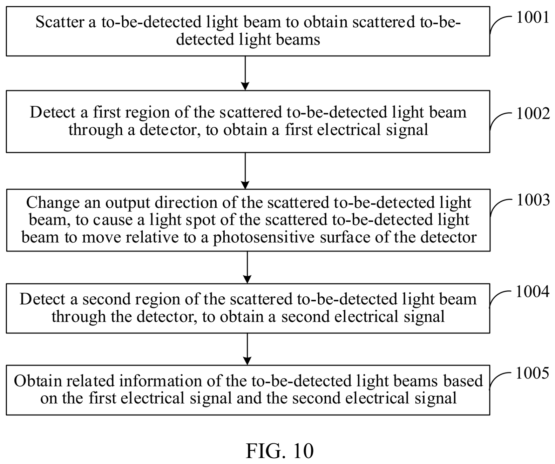

The foregoing describes the detection device provided in this application. The following describes the detection method provided in this application. FIG. 10 is a schematic flowchart of a detection method according to an embodiment of this application. As shown in FIG. 10, the detection method includes the following steps.

In step 1001, a detection device scatters a to-be-detected light beam to obtain scattered to-be-detected light beams.

The detection device includes a scattering medium. The scattering medium is also referred to as a scattering module. The scattering medium may be a nano-particle pressing sheet, a multi-mode optical fiber, a diffraction optical array structure, or the like. The detection device scatters the to-be-detected light beam through the scattering medium, to obtain the scattered to-be-detected light beams.

In step 1002, the detection device detects a first region of the scattered to-be-detected light beam through a detector, to obtain a first electrical signal.

The detection device includes the detector. The detector is also referred to as a photoelectric detector. A photosensitive surface of the detector is on a first plane. A size of a light spot of the scattered to-be-detected light beam on the first plane is greater than a size of the photosensitive surface. The photosensitive surface is inside the light spot. A region in which the photosensitive surface is located corresponds to a first region of the light spot, and also corresponds to the first region of the scattered to-be-detected light beam. The detection device detects the first region of the scattered to-be-detected light beam through the detector, to obtain the first electrical signal.

In step 1003, the detection device changes an output direction of the scattered to-be-detected light beam, to cause the light spot of the scattered to-be-detected light beam to move relative to the photosensitive surface of the detector.

The detection device includes an optical modulator. The optical modulator may be a transmissive liquid crystal spatial optical modulator, a reflective liquid crystal spatial optical modulator, a digital micromirror and an array thereof based on an MEMS technology, a magneto-optical spatial optical modulator, a rotating mirror system, an electro-optical microcavity array, or the like. The detection device changes the output direction of the scattered to-be-detected light beam through the optical modulator, to cause the light spot of the scattered to-be-detected light beam to move relative to the photosensitive surface of the detector. For example, at a first moment, the photosensitive surface is located at a position 1 of the light spot; and at a second moment, the photosensitive surface is located at a position 2 of the light spot.

In step 1004, the detection device detects a second region of the scattered to-be-detected light beam through the detector, to obtain a second electrical signal.

After the light spot moves relative to the photosensitive surface of the detector, the region in which the photosensitive surface is located corresponds to a second region of a light spot, and also corresponds to the second region of the scattered to-be-detected light beam. The detection device detects the second region of the scattered to-be-detected light beam through the detector, to obtain the second electrical signal.

In step 1005, the detection device obtains related information of the to-be-detected light beams based on the first electrical signal and the second electrical signal.

The detection device can obtain the related information of the to-be-detected light beams based on a weight matrix of the scattering medium and a plurality of electrical signals. For example, the weight matrix includes m rows and n columns. The weight matrix includes m×n values. m and n are integers greater than 0. The scattering medium includes m scattering regions. Each of the m scattering regions corresponds to one row of values in the weight matrix. A value corresponding to each scattering region depends on a physical characteristic of the scattering medium in the scattering region. Alternatively, a target scattering region of the scattering medium corresponds to m different incident angles. Each of the m different incident angles corresponds to one row of values in the weight matrix. A value corresponding to each incident angle depends on a physical characteristic of the target scattering region. The weight matrix may be obtained through measurement. How the detection device obtains the weight matrix is not limited in embodiments of this application. The related information of the to-be-detected light beams is n energy intensities of the to-be-detected light beam on n wavelengths. The n energy intensities are in one-to-one correspondence with the n wavelengths. Alternatively, the related information of the to-be-detected light beams is a correspondence between the n energy intensities and the n wavelengths.

It should be understood that there is a similarity between the descriptions of the detection method in FIG. 10 and the detection device in any one of FIG. 1 to FIG. 9. Therefore, for descriptions of the detection method in FIG. 10, refer to the foregoing descriptions of the detection device in any one of FIG. 1 to FIG. 9. For example, the first region and the second region include an overlapping region. The detection method further includes the following step: The detection device adjusts an area size of the overlapping region based on a value of h. For another example, the detection device adjusts a focus adjuster based on the value of h, to change a size of the light spot of the scattered to-be-detected light beam.

The foregoing descriptions are merely specific implementations of this application, but are not intended to limit the protection scope of this application. Any variation or replacement readily figured out by a person skilled in the art within the technical scope disclosed in this application shall fall within the protection scope of this application.

**Claims**

1. A detection device, comprising an optical coupler, a scattering component, a detector, and a processor, wherein

    the optical coupler is configured to: receive a to-be-detected light beam, and couple the to-be-detected light beam to the scattering component;

    the scattering component is configured to: scatter the to-be-detected light beam, and output a plurality of scattered to-be-detected light beams at different angles to the detector, wherein the plurality of scattered to-be-detected light beams are in one-to-one correspondence with the plurality of angles;

    the detector is configured to: detect a plurality of different regions of the plurality of scattered to-be-detected light beams to obtain a plurality of electrical signals, and transmit the plurality of electrical signals to the processor, wherein the plurality of regions are in one-to-one correspondence with the plurality of electrical signals, and the plurality of regions are in one-to-one correspondence with the plurality of scattered to-be-detected light beams; and

    the processor is configured to compute the plurality of electrical signals to obtain related information of the to-be-detected light beams.

2. The detection device according to claim 1, wherein the scattering component comprises a scattering medium and an optical modulator, wherein

    the scattering medium is configured to: receive the to-be-detected light beam from the optical coupler, scatter the to-be-detected light beam, and cause the scattered to-be-detected light beams to be incident to the optical modulator; and

    the optical modulator is configured to output the plurality of scattered to-be-detected light beams at the different angles to the detector.

3. The detection device according to claim 1, wherein the scattering component comprises an optical modulator and a scattering medium, wherein

    the optical modulator is configured to: receive the to-be-detected light beam from the optical coupler, and output a plurality of to-be-detected light beams at different angles to the scattering medium; and

    the scattering medium is configured to: scatter the plurality of to-be-detected light beams to obtain a plurality of scattered to-be-detected light beams, and cause the plurality of scattered to-be-detected light beams to be incident to the detector, wherein the plurality of to-be-detected light beams are in one-to-one correspondence with the plurality of scattered to-be-detected light beams.

4. The detection device according to any one of claims 1 to 3, wherein the detector is a linear array detector, and the optical modulator is a one-dimensional optical modulator.

5. The detection device according to claim 4, wherein a photosensitive surface of the detector is on a first plane, and a difference between a first width of a light spot irradiated by the scattered to-be-detected light beam on the first plane and a second width of the photosensitive surface is less than or equal to 50 percent of the first width.

6. The detection device according to any one of claims 1 to 5, wherein the plurality of regions comprise a first region and a second region, and the first region and the second region comprise an overlapping region.

7. The detection device according to claim 6, wherein an area of the overlapping region is less than or equal to 90 percent of an area of the first region.

8. The detection device according to any one of claims 1 to 7, wherein the detection device further comprises a focus adjuster, and the focus adjuster is located on an optical transmission path between the scattering component and the detector, wherein

    the focus adjuster is configured to change a focal length of the scattered to-be-detected light beam.

9. The detection device according to any one of claims 1 to 8, wherein the detection device further comprises a mask, and the mask is located on the optical transmission path between the scattering component and the detector.

10. The detection device according to any one of claims 1 to 4 and 6 to 9, wherein the photosensitive surface of the detector is on the first plane, and a ratio of a size of the light spot irradiated by the scattered to-be-detected light beam on the first plane to a size of the photosensitive surface is from 1,000 to 1,000,000.

11. The detection device according to any one of claims 1 to 10, wherein the detection device further comprises a thermoelectric cooler controller, wherein
the thermoelectric cooler controller is configured to keep a temperature of the scattering medium within a target interval.

12. The detection device according to any one of claims 1 to 11, wherein the detection device further comprises a first vibration isolator and a second vibration isolator, wherein

the first vibration isolator is configured to reduce vibration of the scattering medium; and
the second vibration isolator is configured to reduce vibration of the optical modulator.

13. A detection method, comprising:

scattering a to-be-detected light beam to obtain scattered to-be-detected light beams;
detecting, by a detector, a first region of the scattered to-be-detected light beam to obtain a first electrical signal;
changing an output direction of the scattered to-be-detected light beam, to cause a light spot of the scattered to-be-detected light beam to move relative to a photosensitive surface of the detector;
detecting, by the detector, a second region of the scattered to-be-detected light beam to obtain a second electrical signal; and
obtaining related information of the to-be-detected light beams based on the first electrical signal and the second electrical signal.

14. The detection method according to claim 13, wherein the first region and the second region comprise an overlapping region;

the obtaining the related information of the to-be-detected light beams based on the first electrical signal and the second electrical signal comprises: obtaining the related information of the to-be-detected light beams based on h electrical signals, wherein the h electrical signals comprise the first electrical signal and the second electrical signal, and h is an integer greater than or equal to 2; and
the method further comprises:
adjusting an area size of the overlapping region based on a value of h.

15. The detection method according to claim 13 or 14, wherein

the obtaining the related information of the to-be-detected light beams based on the first electrical signal and the second electrical signal comprises: obtaining the related information of the to-be-detected light beams based on h electrical signals, wherein the h electrical signals comprise the first electrical signal and the second electrical signal, and h is an integer greater than or equal to 2; and
the method further comprises:
adjusting a size of the light spot of the scattered to-be-detected light beam based on a value of h.

FIG. 1

FIG. 2a

FIG. 2b

FIG. 3

FIG. 4a

FIG. 4b

FIG. 5

FIG. 6

FIG. 7

704

| | | | |
|---|---|---|---|
| Region 1 | Region 2 | | |
| Region 3 | Region 4 | | |
| | | | |
| | | | |

FIG. 8

402

Optical modulator

Clock signal

103 Running instruction

Detector

104

Processor

FIG. 9

| Scatter a to-be-detected light beam to obtain scattered to-be-detected light beams | 1001 |

↓

| Detect a first region of the scattered to-be-detected light beam through a detector, to obtain a first electrical signal | 1002 |

↓

| Change an output direction of the scattered to-be-detected light beam, to cause a light spot of the scattered to-be-detected light beam to move relative to a photosensitive surface of the detector | 1003 |

↓

| Detect a second region of the scattered to-be-detected light beam through the detector, to obtain a second electrical signal | 1004 |

↓

| Obtain related information of the to-be-detected light beams based on the first electrical signal and the second electrical signal | 1005 |

FIG. 10

## INTERNATIONAL SEARCH REPORT

| International application No. |
| --- |
| **PCT/CN2024/114425** |

| A. | CLASSIFICATION OF SUBJECT MATTER |
| --- | --- |

G01J3/28(2006.01)i; G01J3/42(2006.01)i; G01J3/44(2006.01)i; G01J3/02(2006.01)i; G01N21/55(2014.01)i; G01N21/59 (2006.01)i; G01N21/25(2006.01)i; G01N21/31(2006.01)i; G01N21/01(2006.01)i

According to International Patent Classification (IPC) or to both national classification and IPC

| B. | FIELDS SEARCHED |
| --- | --- |

Minimum documentation searched (classification system followed by classification symbols)

IPC: G01J G01N

Documentation searched other than minimum documentation to the extent that such documents are included in the fields searched

Electronic data base consulted during the international search (name of data base and, where practicable, search terms used)

CNTXT: WPABSC; ENTXTC; CNKI; VEN; WPABS; ENTXT: 光调制器, 微镜, 转镜, 散射, 光束, 方向, 角度, 探测, 检测, light modulator, micromirror, rotation mirror, scatter+, direction, angle, detect+

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 101688808 A (NIPPON TELEGRAPH AND TELEPHONE CORP.) 31 March 2010 (2010-03-31)<br>    description, page 11, paragraphs 1-5 from the bottom, page 12, paragraphs 1-4, and figure 8 | 1, 3-15 |
| A | CN 103196889 A (XU CHUN et al.) 10 July 2013 (2013-07-10)<br>    entire document | 1-15 |
| A | CN 116659668 A (XUZHOU GUANGYIN TECHNOLOGY DEVELOPMENT CO., LTD.) 29 August 2023 (2023-08-29)<br>    entire document | 1-15 |
| A | GB 1298658 A (BECKMAN INSTRUMENTS INC.) 06 December 1972 (1972-12-06)<br>    entire document | 1-15 |
| A | US 2008013076 A1 (HITACHI HIGH-TECHNOLOGIES CORP.) 17 January 2008 (2008-01-17)<br>    entire document | 1-15 |

☐ Further documents are listed in the continuation of Box C.　　☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **30 October 2024** | **11 November 2024** |

| Name and mailing address of the ISA/CN | Authorized officer |
| --- | --- |
| **China National Intellectual Property Administration (ISA/ CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

| International application No. |
| --- |
| **PCT/CN2024/114425** |

| Patent document cited in search report | | | Publication date (day/month/year) | Patent family member(s) | | | Publication date (day/month/year) |
| --- | --- | --- | --- | --- | --- | --- | --- |
| CN | 101688808 | A | 31 March 2010 | CN | 101688808 | B | 25 January 2012 |
| CN | 103196889 | A | 10 July 2013 | None | | | |
| CN | 116659668 | A | 29 August 2023 | None | | | |
| GB | 1298658 | A | 06 December 1972 | None | | | |
| US | 2008013076 | A1 | 17 January 2008 | None | | | |

Form PCT/ISA/210 (patent family annex) (July 2022)

**REFERENCES CITED IN THE DESCRIPTION**

**Patent documents cited in the description**

- CN 202311127450